# EUROPÄISCHE PATENTSCHRIFT

(11) **EP 0 570 649 B1**
(45) Veröffentlichungstag und Bekanntmachung des Hinweises auf die Patenterteilung: **14.08.1996**
(21) Anmeldenummer: 92810374.6
(22) Anmeldetag: 19.05.1992
(51) Int. Cl.: F16K 31/08, F15B 13/044, F02M 59/46

(54) **Vorrichtung zum Steuern des Durchflusses eines hydraulischen Druckmittels, insbesondere für die Brennstoffeinspritzung einer Hubkolbenbrennkraftmaschine**
Device for controlling a hydraulic fluid flow, especially for fuel injection to an internal combustion engine
Dispositif de commande de l'alimentation en fluide hydraulique, notamment pour l'injection du carburant d'un moteur à combustion interne

(43) Veröffentlichungstag der Anmeldung: 24.11.1993
(73) Patentinhaber: NEW SULZER DIESEL AG, CH-8401 Winterthur (CH)
(72) Erfinder: Wunder, Alfred Franz, CH-8400 Winterthur (CH)
(74) Vertreter: Hammer, Bruno, Dr.

(56) Entgegenhaltungen:
- WO-A-91/06109
- DE-A- 3 208 651
- DE-A- 3 345 880
- GB-A- 2 136 499
- GB-A- 2 138 969
- US-A- 5 076 537
- IBM TECHNICAL DISCLOSURE BULLETIN Bd. 6, Nr. 5, Oktober 1963, NEW YORK US Seiten 40 - 41 A. W. ORLANDO 'HIGH SPEED VALVE'

## Beschreibung

Die Erfindung bezieht sich auf eine Vorrichtung zum Steuern des Durchflusses eines hydraulischen Druckmittels mit den Merkmalen des Oberbegriffs des Anspruchs 1. Diese Vorrichtung ist insbesondere in Verbindung mit der Brennstoffeinspritzung einer Hubkolbenbrennkraftmaschine geeignet.

Aus der DE-OS 32 08 651 ist eine Vorrichtung der eingangs genannten Art bekannt. Der Antrieb der Ventilspindel durch die Spule hat den Vorteil, dass man Schaltzeiten erhält, die gegenüber denen von Elektromagneten wesentlich kürzer sind. Beim Stromfluss durch die Antriebsspule wird eine erhebliche Menge an joule'scher Wärme erzeugt, deren Abfuhr aus der Vorrichtung problematisch ist. Ein Nachteil dieser Wärmeentwicklung besteht darin, dass der elektrische Widerstand in der Spule erhöht wird, so dass sich die Stromzufuhr verringert und damit auch die Antriebskraft der Spule, was sich auf die angestrebten kurzen Schaltzeiten negativ auswirkt. Um diesen Nachteil zu beheben, wird in der DE-OS vorgeschlagen, an den beiden Enden der einlagig aus rechteckigem Draht gewickelten Spule, fluchtend zu dieser je ein ringförmiges Element anzubringen, das durch mehrere, über einen Teil des Umfanges sich erstreckende Einschnitte elastisch gemacht ist. Die beiden ringförmigen Elemente sind mit der Spule metallisch verbunden und sie dienen sowohl der Stromzu- und -abfuhr als auch der Abfuhr des grössten Teils der Wärme. Weitere Wärme soll über die Luftschicht zwischen der Spule und dem Magnetjoch abgeführt werden. Die Anordnung der ringförmigen Elemente ist konstruktiv aufwendig und erschwert die Zugänglichkeit zur Antriebsspule. Ausserdem dämpfen die Elemente die Beweglichkeit der Spule. Ferner ist die Wärmeabfuhr sehr begrenzt, zumal die freien Enden der beiden ringförmigen Elemente in elektrisch isolierenden Ringen aus Kautschuk oder Kunststoff im Ventilgehäuse bzw. im Magnetjoch eingelassen sind.

Der Erfindung liegt die Aufgabe zugrunde, eine Vorrichtung der eingangs genannten Art dahingehend zu verbessern, dass auf konstruktiv einfachere Weise und unter Beibehaltung kürzester Schaltzeiten aus ihr die joule'sche Wärme wesentlich besser abgeführt werden kann als bei der bekannten Vorrichtung.

Diese Aufgabe wird erfindungsgemäss durch die Merkmale des Kennzeichens des Anspruchs 1 gelöst. Bei dieser Konstruktion sitzt die Antriebsspule fest auf dem Spulenträger, und es fehlen beiderseits von ihr angebrachte ringförmige Elemente, die die Bewegung der Spule dämpfen würden. Die Flansche, die gegenüber der Spule radial etwas vorstehen, schützen die Spule vor einer schleifenden Berührung mit dem äusseren Magnetpol, wodurch - nach einer Verletzung der Isolation des Spulendrahtes - ein Kurzschluss entstehen könnte. Zugleich bleibt die Zugänglichkeit zur Spule und zum Spulenträger erhalten. Die joule'sche Wärme wird durch die Kühlluftzufuhr im Bereich der Magnetpole in wirkungsvoller Weise abgeführt, so dass die bisherigen Beschränkungen bezüglich der Stromzufuhr und der Antriebskraft eliminiert sind. Gleichzeitig mit der Wärme werden mit der Kühlluft eine etwaige Leckage von hydraulischem Druckmittel und/oder etwaige Abriebteilchen des Spulenträgers aus dem Magnet herausgeführt.

Ein Ausführungsbeispiel sowie einige Anwendungen der Erfindung sind in der folgenden Beschreibung anhand der Zeichnung näher erläutert. Es zeigen:
- Fig.1: schematisch einen Axialschnitt durch eine hydraulische Steuervorrichtung mit elektrodynamischem Antrieb,
- Fig.la: eine Ansicht des Spulenträgers aus Fig.l in grösserem Massstab,
- Fig.2: schematisch einen Axialschnitt durch ein 3/2-Wegeventil, das der hydraulischen Vorrichtung nach Fig.1 nachgeschaltet ist,
- Fig.3: schematisch einen Axialschnitt durch ein 3/2-Wegeventil, bei dem die Steuervorrichtung nach Fig.1 in den Schieberkolben des 3/2-Wegeventils integriert ist,
- Fig.4: ein Schaltschema einer Brennstoffeinspritzanordnung für eine Hubkolbenbrennkraftmaschine unter Verwendung der Steuervorrichtung gemäss Fig.1 und dem 3/2-Wegeventil nach Fig.3 und
- Fig.5 und 6: von einem Kathodendstrahloszillograph aufgenommene Diagramme, in denen in Abhängigkeit vom elektrischen Steuersignal des elektrodynamischen Antriebs der zeitliche Bewegungsablauf der Teile in der Steuervorrichtung und der Brennstoffeinspritzanordnung gemäss Fig.3 und 4 dargestellt sind.

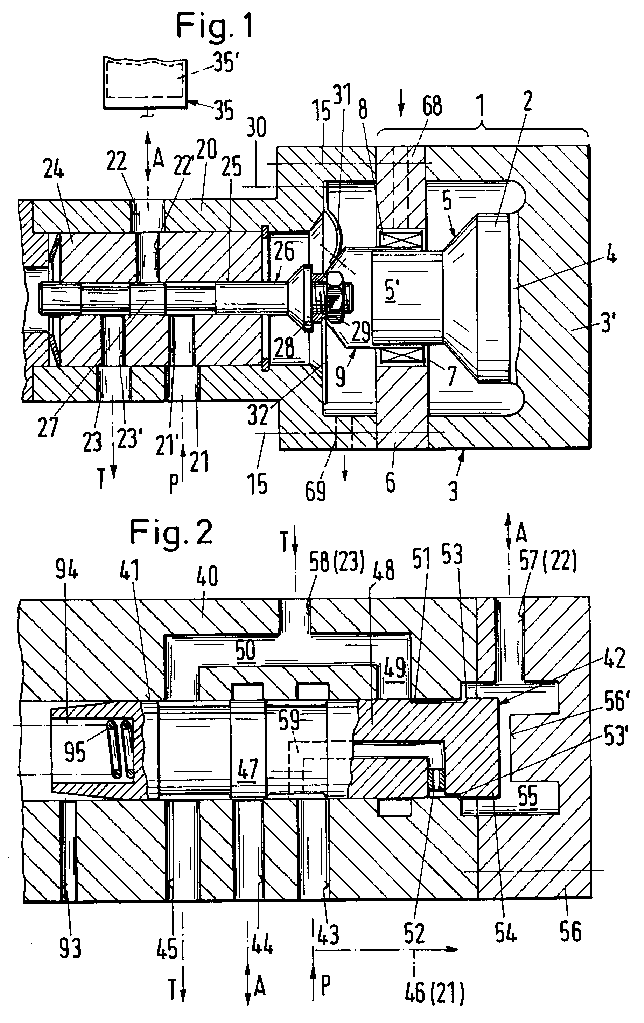

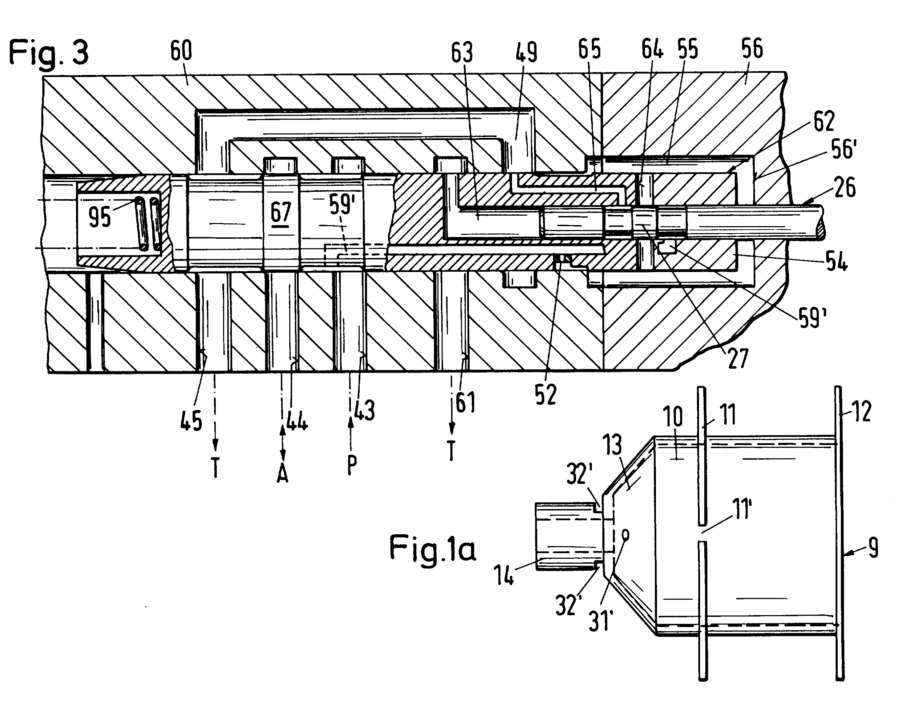

Gemäss Fig.1 weist der elektrodynamische Antrieb 1 einen Permanentmagnet 2 in Form einer runden Scheibe auf, die mit radialem Abstand von einem topfförmigen Gehäuse 3 aus magnetischem Werkstoff umgeben ist. Ein gegenüber dem Boden 3' des topfförmigen Gehäuses 3 vorstehender Absatz 4 liegt an der Scheibe 2 an und hat einen Durchmesser, der etwa gleich dem der Scheibe 2 ist. Auf der dem Absatz 4 abgewendeten Seite der Scheibe 2 liegt an dieser ein Rotationskörper 5 an, der aus einem kegelstumpfförmigen Abschnitt und einem zylindrischen Abschnitt 5' besteht. Der kegelstumpfförmige Abschnitt verjüngt sich, vom Durchmesser der Scheibe 2 ausgehend, zum zylindrischen Abschnitt 5' hin. An dem in Fig.1 linken Stirnende des Gehäuses 3 liegt eine Ringscheibe 6 an, deren Aussendurchmesser gleich dem des Gehäuses 3 ist. Der Innendurchmesser der Ringscheibe 6 ist grösser als der Aussendurchmesser des zylindrischen Abschnitts 5', so dass zwischen diesen und der Ringscheibe 6 ein ringförmiger Luftspalt 7 freibleibt. Der Rotationskörper 5 und die Ringscheibe 6 bestehen ebenfalls aus magnetischem Werkstoff. Die magnetischen Feldlinien erstrecken sich also, vom Permanentmagnet 2 ausgehend, einerseits durch den Absatz 4, den Boden 3', die Wand des topfförmigen Gehäuses 3 und die Ringscheibe 6 sowie andererseits durch den kegelstumpfförmigen Abschnitt und den zylindrischen Abschnitt 5' des Rotationskörpers 5 und schliessen sich im ringförmigen Luftspalt 7. Die diesen Luftspalt begrenzenden Flächen der Ringscheibe 6 und des zylindrischen Abschnitts 5' bilden die beiden Pole des Magneten.

In dem Luftspalt 7 ist eine Antriebsspule 8 angeordnet, die auf einen Spulenträger 9 gewickelt ist und z.B. aus einer Wicklung aus Kupferdraht besteht. Der Spulenträger 9 ist als hohler Rotationskörper ausgebildet und in axialer Richtung hin- und herbeweglich im Luftspalt angeordnet. Der Spulenträger 9 weist gemäss Fig.1a einen zylindrischen Abschnitt 10 grossen Durchmessers auf, der aussen mit zwei Flanschen 11 und 12 versehen ist, von denen der Flansch 12 sich am Ende des Abschnitts 10 befindet. Der Raum zwischen den Flanschen 11 und 12 dient zur Aufnahme der Windungen der Antriebsspule 8. Der Flansch 11 weist zwei diametral angeordnete Schlitze 11' auf, durch die die beiden Drahtenden der Spule aus dem Wickelraum herausgeführt sind. Am in Fig.1a linken Ende des Abschnitts 10 schliesst sich ein sich verjüngender Hohlkegelstumpf 13 an, der an seinem verjüngten Ende in einen hohlzylindrischen Abschnitt 14 übergeht. Um die Masse des aus dem Spulenträger 9 und der Antriebsspule 8 bestehenden beweglichen Systems möglichst klein zu halten sowie auch aus magnetischen Gründen, sind die Abschnitte 10 und 13 sowie die Flansche 11 und 12 dünnwandig und der ganze Spulenträger aus Titan hergestellt.

Wie Fig.1 zeigt, schliesst sich an die Ringscheibe 6 nach links ein Ventilgehäuse 20 einer hydraulischen Steuervorrichtung an. Das Ventilgehäuse 20 weist drei Anschlussbohrungen 21, 22 und 23 auf. Die Anschlussbohrung 21 ist über eine nicht näher dargestellte Leitung mit einer Druckquelle verbunden, die hydraulisches Druckmittel (Pfeil P) der Steuervorrichtung zuführt. Die Anschlussbohrung 22 ist über eine nicht näher dargestellte Leitung mit einer Vorrichtung 35 verbunden, in der ein Kolben 35' beweglich angeordnet ist, der vom Druckmittel (Doppelpfeil A) aus der Steuervorrichtung beaufschlagt ist. Die Anschlussbohrung 23 ist über eine nicht näher dargestellte Leitung mit einem Sammelgefäss verbunden, dem also das die Vorrichtung 35 und die Steuervorrichtung verlassende Druckmittel (Pfeil T) zuströmt.

Der vom Druckmittel beaufschlagte Kolben 35' in der nicht detailliert gezeichneten Vorrichtung kann ein Servokolben sein, der ein Auslassventil in einer Hubkolbenbrennkraftmaschine der Dieselbauart in öffnendem Sinne betätigt. Es sind auch andere Anwendungsfälle möglich, indem das Druckmittel einen Schieberkolben eines 3/2-Wegeventils beaufschlagt, das als hydraulischer Schalter wirkt.

Im Ventilgehäuse 20 ist eine Hülse 24 angeordnet, die zu den Anschlussbohrungen 21, 22 und 23 fluchtende Bohrungen 21', 22' bzw. 23' aufweist. Ausserdem weist die Hülse 24 eine zentrale Bohrung 25 auf, in der eine Ventilspindel 26 mit Steuerkolben 27 axial beweglich geführt ist. Die Ventilspindel 26 weist nahe ihrem in Fig.1 rechten Ende einen Flansch 28 auf und ist anschliessend als Gewindebolzen ausgebildet, auf dem der Spulenträger 9 mit seinem hohlzylindrischen Abschnitt 14 gelagert ist. Der Spulenträger 9 ist mittels einer auf den Gewindebolzen geschraubten Mutter 29 an der Ventilspindel 26 befestigt.

Das Ventilgehäuse 20 ist mit zwei nicht näher dargestellten Anschlüssen 30 für eine elektrische Leitung versehen, über die elektrische Steuersignale für den elektrodynamischen Antrieb zugeführt werden. Von den Anschlüssen 30 ist in Fig.1 der Uebersichtlichkeit wegen nur einer gezeichnet. Der zweite Anschluss ist symmetrisch zum ersten angeordnet. Im Bereich des Anschlusses 30 ist auf der Innenseite des Ventilgehäuses 20 das eine Ende einer gebogenen Feder 31 nichtleitend mit diesem Gehäuse verbunden, deren anderes Ende mit dem kegeligen Abschnitt 13 des Spulenträgers 9 an der Stelle 31' (Fig.1a) nichtleitend verbunden ist. Die Feder 31 hat - in axialer Richtung gesehen - halbkreisähnliche Form und ist somit sehr biegeweich ausgebildet, um die Beweglichkeit des Spulenträgers 9 möglichst wenig zu behindern. Nahe dieser Verbindungsstelle 31' ist ein Drahtende der Antriebsspule 8 mit der Feder 31 elektrisch leitend verbunden. Der Spulenträger 9 wird in seiner neutralen Lage durch zwei Blattfedern 32 gehalten, von denen in Fig.1 ebenfalls nur eine gezeichnet ist. Das eine Ende der Blattfeder 32 ragt in einen Schlitz 32' im zylindrischen Abschnitt 14 des Spulenträgers 9, wogegen das andere Ende im Ventilgehäuse 20 befestigt ist.

In der Ringscheibe 6 sind - über deren Umfang gleichmässig verteilt - radiale Kanäle 68 vorgesehen, die in den Luftspalt 7 münden und über die Kühlluft zur Antriebsspule 8 geführt wird. Zum Abführen der Kühlluft sind im Ventilgehäuse 20 nahe der Ringscheibe 6 radiale Kanäle 69 vorhanden, über die auch Leckagedruckmittel abgeführt wird. Das tropfförmige Gehäuse 3, die Ringscheibe 6 und das Ventilgehäuse 20 werden durch Schrauben zusammengehalten, die in Fig.1 durch die strichpunktierten Linien 15 angedeutet sind.

Die beschriebene Vorrichtung funktioniert wie folgt. Wenn die Antriebsspule 8 über die Anschlüsse 30 ein elektrisches Steuersignal erhält, bewegt sie sich im Luftspalt 7 z.B. nach links und verschiebt dabei über den Spulenträger 9 die Ventilspindel 26 mit dem Steuerkolben 27. Die Bewegungsrichtung der Antriebsspule 8 ist durch die sogenannte Linke-Handregel bestimmt. Der Steuerkolben 27 gibt mit seiner rechten Steuerkante den Weg für das Druckmittel von der Bohrung 21' zur Bohrung 22' frei, so dass Druckmittel zum Kolben 35'der Vorrichtung 35 gelangt, der sich dementsprechend in Fig.1 nach oben verschiebt. Die Dauer der Druckmittelzufuhr ist abhängig von der Dauer des elektrischen Steuersignals. Wenn das Steuersignal beendet ist, hört auch die Kraftwirkung auf die Antriebsspule 8 auf und diese wird von den Blattfedern 32 in ihre Normallage zurückbewegt. Das gleiche gilt auch für die Ventilspindel 26, so dass dann der Steuerkolben 27 wieder die in Fig.1 gezeichnete Lage einnimmt und die Druckmittelzufuhr absperrt. Der Kolben 35' bleibt in der angehobenen Stellung. Erhält die Antriebsspule 8 ein elektrisches Steuersignal, dessen Stromrichtung zu dem zuvor beschriebenen Fall umgekehrt ist, so bewegt sie sich in Fig.1 nach rechts. Die Ventilspindel 26 und der Steuerkolben 27 verschieben sich ebenfalls nach rechts, wodurch eine Verbindung zwischen den Bohrungen 23' und 22' hergestellt wird. Damit gelangt Druckmittel vom Kolben 35' über die Anschlussbohrungen 22 und 23 zum Sammelgefäss, was eine entsprechende Abwärtsbewegung des Kolbens 35' zur Folge hat. Am Ende des Steuersignals kehren die Ventilspindel 26 und die Antriebsspule 8 wieder in die Neutrallage zurück und der Kolben 35' bleibt stehen. Die Zuordnung der Druckmittelbeaufschlagung P, A, T zu den Bohrungen 21', 22' bzw. 23' kann auch anders als beschrieben, je nach Art der Steuerung, gewählt werden.

Gemäss Fig.2 weist das 3/2-Wegeventil ein Ventilgehäuse 40 mit einer zentralen Bohrung 41 auf, in der ein Schieberkolben 42 beweglich geführt ist. Das Ventilgehäuse 40 weist in Fig.2 auf seiner Unterseite drei Anschlussbohrungen 43, 44 und 45 auf. Die Anschlussbohrung 43 ist über eine nicht näher dargestellte Leitung mit einer Druckquelle verbunden, die hydraulisches Druckmittel (Pfeil P) dem 3/2-Wegeventil zuführt. Da dieses Ventil der Steuervorrichtung gemäss Fig.1 nachgeschaltet ist, kann die erwähnte Druckquelle die gleiche sein, die die Anschlussbohrung 21 im Ventilgehäuse 20 mit Druckmittel versorgt. In diesem Fall zweigt von der an die Bohrung 43 angeschlossenen Leitung eine Leitung 46 ab, die zur Anschlussbohrung 21 führt. Die Anschlussbohrung 44 ist über eine nicht näher dargestellte Leitung mit einer Vorrichtung verbunden, die der Vorrichtung 35 in Fig.1 entsprechen kann. Die Vorrichtung enthält ebenfalls einen beweglichen Kolben, der dann vom Druckmittel (Doppelpfeil A) aus der Anschlussbohrung 44 beaufschlagt ist. Die Anschlussbohrung 45 ist über eine nicht näher dargestellte Leitung mit einem Sammelgefäss verbunden (Pfeil T). Das Sammelgefäss kann das gleiche sein, in das die an die Anschlussbohrung 23 angeschlossene Leitung in Fig.1 mündet.

Der Schieberkolben 42 weist einen Steuerkolben 47 auf, der in der gezeichneten Stellung vor der Anschlussbohrung 44 steht und diese absperrt. In Fig.2 rechts vom Steuerkolben 47 weist der Schieberkolben 42 einen weiteren Steuerkolben 48 auf, dessen in Fig.2 rechte Steuerkante 51 mit einem Ablaufkanal 49 zusammenwirkt, der über einen axialen Kanal 50 mit der Anschlussbohrung 45 in Verbindung steht. Die Steuerkante 51 ist durch eine Abflachung der Mantelfläche des Schieberkolbens 42 entstanden. Am in Fig.2 rechten Ende der Abflachung ist eine weitere Steuerkante 53 entstanden, die zu einem Steuerkolben 54 gehört, der in einen druckmittelgefüllten Steuerraum 55 ragt. Dieser Steuerraum 55 befindet sich in einem Deckel 56 des Ventilgehäuses 40 und steht mit einer Anschlussbohrung 57 in Verbindung, die - anstelle der Vorrichtung 35 in Fig.1 - mit der Anschlussbohrung 22 der Steuervorrichtung in Fig.1 verbunden ist. Innerhalb des Steuerraums 55 bildet der Deckel 56 einen vorstehenden Absatz 56', der als Anschlag für den Schieberkolben 42 dient. In den Kanal 50 mündet eine Anschlussbohrung 58, die mit der Anschlussbohrung 23 der Steuervorrichtung in Fig.1 verbunden ist. Zwischen den Steuerkolben 47 und 48 zweigt im Bereich der Anschlussbohrung 43 ein Kanal 59 ab, der sich durch den Schieberkolben 42 bis in den Bereich der Abflachung zwischen den Steuerkanten 51 und 53 erstreckt und dann über eine Drossel 52 in eine weitere Abflachung übergeht, die der zuerst erwähnten Abflachung gegenüberliegt. Am in Fig.2 rechten Ende der Abflachung besteht eine weitere Steuerkante 53' des Steuerkolbens 54, die - in axialer Richtung des Schieberkolbens gesehen - gegenüber der Steuerkante 53 etwas nach links versetzt ist und ebenfalls mit dem Steuerraum 55 zusammenwirkt. An dem in Fig.2 linken Ende des Schieberkolbens 42 ist dessen Aussenfläche konisch ausgebildet, um mit einem nicht dargestellten, berührungslosen Messfühler die jeweilige Stellung des Schieberkolbens 42 erfassen zu können. Der Messfühler wird in einer Bohrung 93 des Ventilgehäuses 40 angeordnet. Ausserdem weist das in Fig.2 linke Ende des Schieberkolbens 42 ein Sackloch 94 auf, in dem eine Schraubenfeder 95 angeordnet ist, deren nicht dargestelltes Ende sich an einer festen Fläche des Ventilgehäuses 40 abstützt. Die Schraubenfeder 95 drückt den Schieberkolben 42 in Richtung zum Anschlag 56' im Steuerraum 55.

Wenn die Vorrichtung gemäss Fig.2 drucklos ist, so wird der Schieberkolben 42 von der Schraubenfeder 95 gegen den Anschlag 56' gedrückt. Die Normalstellung des Schieberkolbens 42 ist jedoch die in Fig.2 gezeichnete Stellung. Diese Stellung wird dadurch erreicht, dass unter Druck stehendes Druckmittel über die Anschlussbohrung 43, den Kanal 59, die Drossel 52 und die in Fig.2 darunter befindliche Abflachung in den Steuerraum 55 gelangt. Der sich im Steuerraum 55 aufbauende Druck verschiebt den Schieberkolben 42 in Fig.2 nach links, bis in die in Fig.2 gezeichnete Stellung, in der die Steuerkante 53' sich innerhalb der Bohrung 41 des Ventilgehäuses 40 befindet. Etwaiges Leckagedruckmittel, das noch in den Steuerraum 55 gelangt, verschiebt den Schieberkolben 52 in Fig.2 geringfügig nach links, so dass die linke Steuerkante 51 an der oberen Abflachung den Zutritt zum Ablaufkanal 49 freigibt und etwas Druckmittel in diesen Kanal übertreten lässt. Sobald infolge des Entweichens der Druck in der Steuerkammer 55 wieder fällt, verschiebt die Schraubenfeder 95 den Schieberkolben 42 etwas zurück, bis die Steuerkante 51 den Zutritt zum Ablaufkanal 49 wieder absperrt.

Wenn bei der beschriebenen Zusammenschaltung der Vorrichtungen gemäss Fig.1 und 2 die Antriebsspule 8 ein elektrisches Steuersignal erhält, so verschiebt sich - wie zu Fig.1 beschrieben - der Steuerkolben 27 der Ventilspindel 26 nach links, und es gelangt Druckmittel über die Anschlussbohrung 22 im Ventilgehäuse 20 und die Anschlussbohrung 57 in Deckel 56 (Fig.2) in den Steuerraum 55. Hierdurch wird der Schieberkolben 42 in Fig.2 nach links verschoben, so dass sein Kolben 47 die Verbindung von der Anschlussbohrung 43 zur Anschlussbohrung 44 freigibt und Druckmittel zu dem an der Bohrung 44 angeschlossenen, nicht dargestellten Kolben strömen kann. Während die Verbindung zwischen den Anschlussbohrungen 43 und 44 offen ist, steht die Steuerkante 53 der oberen Abflachung des Schieberkolbens 42 in der Bohrung 41, so dass kein Druckmittel aus dem Steuerraum 55 zum Ablaufkanal 49 gelangen kann. Die beschriebene Bewegung des Schieberkolbens 42 dauert so lange, wie der Steuerkolben 27 die Verbindung zwischen den Bohrungen 21' und 22' offen hält. Diese Bewegung wird unterbrochen, wenn der Steuerkolben 27 in die in Fig.1 gezeichnete Neutrallage zurückkehrt. Da dann kein Druckmittel mehr über die Anschlussbohrung 57 in den Steuerraum 55 nachströmt, bleibt auch der Schieberkolben 42 in der nach links verschobenen Lage. Die Bewegung des Schieberkolbens 42 stellt das Integral der Bewegung der Ventilspindel 26 dar. Erhält die Antriebspule 8 ein Steuersignal in der umgekehrten Stromrichtung, so verschiebt sich der Steuerkolben 27 - wie zu Fig.1 beschrieben - nach rechts und stellt dabei eine Verbindung der Bohrung 22' mit der Bohrung 23' her. Damit steht auch die Anschlussbohrung 57 im Deckel 56 mit der Anschlussbohrung 23 im Ventilgehäuse 20 in Verbindung, und es kann Druckmittel aus dem Steuerraum 55 über die Anschlussbohrung 22 zum Sammelgefäss strömen. Die Schraubenfeder 95 drückt dann den Schieberkolben 42 in die in Fig.2 gezeichnete Lage zurück.

Bei der Anordnung gemäss Fig.3, bei der die Steuervorrichtung gemäss Fig.1 in das 3/2-Wegeventil integriert ist, ist das Ventilgehäuse 60 des 3/2-Wegeventils im wesentlichen gleich ausgebildet, wie das Ventilgehäuse 40 in Fig. 2. Es fehlt im Ventilgehäuse 60 eine der Anschlussbohrung 58 entsprechende Bohrung, hingegen ist im Ventilgehäuse 60 zwischen dem Ablaufkanal 49 und der Anschlussbohrung 43 ein Abfuhrkanal 61 für Leckagedruckmittel vorgesehen, der über eine nicht dargestellte Leitung mit dem Sammelgefäss verbunden ist. Der Schieberkolben 62 weist an seinem in Fig.3 rechten Ende eine zentrale Bohrung 63 auf, in der die Ventilspindel 26 der Steuervorrichtung gemäss Fig.1 axial beweglich angeordnet ist. Im Bereich des Steuerkolbens 27 der Ventilspindel 26 ist im Steuerkolben 54 ein in radialer Richtung durchgehender Kanal 64 vorgesehen, der in den Steuerraum 55 mündet. In Fig.3 links vom Kanal 64 zweigt von der Bohrung 63 ein gekröpft verlaufender Kanal 65 ab, der in den Ablaufkanal 49 mündet. Der im Bereich der Anschlussbohrung 43 abzweigende Kanal 59' erstreckt sich im Schieberkolben 62 über die Drossel 52 und den Kanal 64 hinaus und mündet dann in Fig.3 rechts von diesem Kanal in die Bohrung 63.

Änlich wie zu Fig.2 beschrieben,wird der Schieberkolben 62 in drucklosen Zustand von der Schraubenfeder 95 bis zur in Fig.3 rechten Begrenzungs- oder Anschlagfläche 56' des Steuerraumes 55 gedrückt. Bei Druckmittelzufuhr über die Anschlussbohrung 43 gelangt Druckmittel über den Kanal 59', die Drossel 52 und die darunterliegende Abflachung in den Steuerraum 55, in dem sich nun ein Druck aufbaut und den Schieberkolben in Fig.3 nach links in die gezeichnete Normalstellung verschiebt. Wie bei der Vorrichtung nach Fig.2 kann etwaiges Leckagedruckmittel über die obere Abflachung des Schieberkolbens 62 in den Ablaufkanal 49 gelangen.

Erhält die mit der Ventilspindel 26 verbundene, in Fig.3 nicht sichtbare Antriebspule 8 ein elektrisches Steuersignal, so verschiebt sich z.B. der Steuerkolben 27 in Fig.3 nach links, und es gelangt Druckmittel vom in Fig.3 rechten Ende des Kanals 59' über den Kanal 64 in den Steuerraum 55. Dadurch wird der Schieberkolben 62 in Fig.3 nach links verschoben, so dass sein Kolben 67 eine Verbindung zwischen den Anschlussbohrungen 43 und 44 herstellt und nunmehr Druckmittel zu dem an der Anschlussbohrung 44 angeschlossenen Kolben strömt. Die Verschiebung des Schieberkolbens 62 dauert so lange, bis der Kanal 64 vom Steuerkolben 27 wieder abgesperrt ist. Je nachdem wie gross der Verschiebeweg des Kolbens 67 ist, wird an der Anschlussbohrung 44 ein unterschiedlich grosser Strömungsquerschnitt freigegeben. Bei der in Fig.3 gezeichneten Anordnung ist also der Verschiebeweg des Schieberkolbens 62 proportional dem von der Ventilspindel 26 zurückgelegten Weg. Je nach der Grösse des vom Kolben 67 freigegebenen Querschnitts ist dann die Bewegungsgeschwindigkeit des an der Anschlussbohrung 44 angeschlossenen Kolbens unterschiedlich. Nach Erhalt eines elektrischen Steuersignals an der Antriebsspule 8 in der umgekehrten Richtung als zuvor beschrieben, verschiebt sich die Ventilspindel 26 in Fig.3 nach rechts und der Steuerkolben 27 stellt eine Verbindung zwischen dem Kanal 64 und dem Kanal 65 her, so dass Druckmittel aus dem Steuerraum 55 über den Kanal 65 in den Ablaufkanal 49 strömt. Die Schraubenfeder 95 drückt dann den Schieberkolben 62 wieder in die in Fig.3 gezeichnete Normallage.

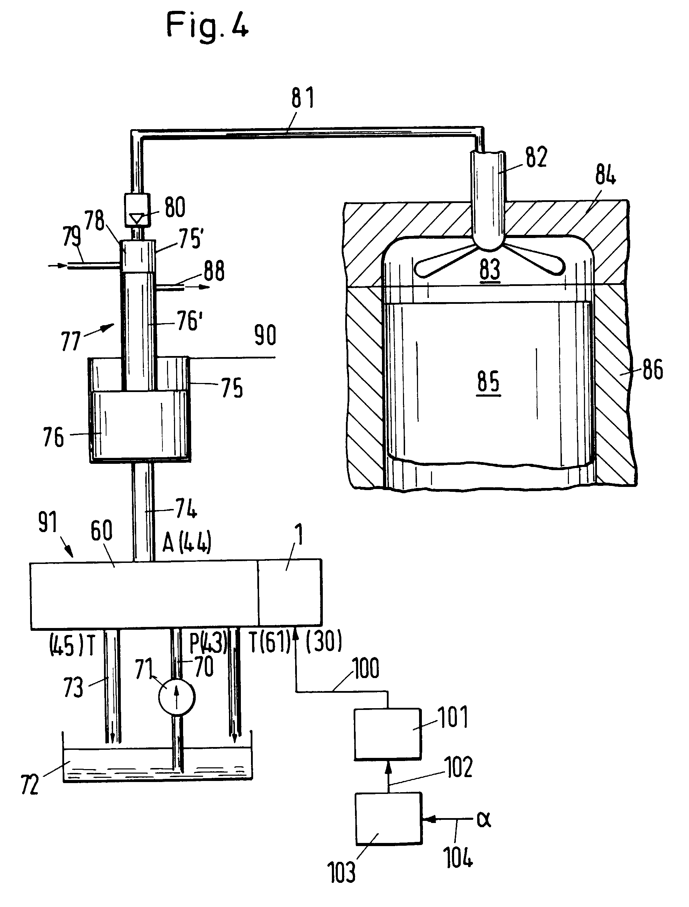

Gemäss Fig.4 wirken der elektrodynamische Antrieb 1 und eine hydraulische Steuervorrichtung 91 gemäss Fig.3 mit einer Brennstoffeinspritzeinrichtung 77 zusammen. An die Anschlussbohrung 43 (Fig.3) des Ventilgehäuses 60 ist in Fig.4 eine Leitung 70 angeschlossen, in der eine Pumpe 71 angeordnet ist, die Druckmittel aus einem Sammelgefäss 72 ansaugt und unter hohem Druck der Steuervorrichtung 91 zuführt. An die Anschlussbohrung 45 (Fig.3) des Ventilgehäuses 60 ist in Fig.4 eine Ablaufleitung 73 angeschlossen, über die Druckmittel in das Sammelgefäss 72 zurückströmt. An die Anschlussbohrung 44 (Fig.3) des Ventilgehäuses 60 ist in Fig.4 eine Leitung 74 angeschlossen, die in einen Zylinder 75 mündet, in dem ein Kolben 76 der Brennstoffeinspritzeinrichtung 77 in Fig.4 auf- und abbeweglich angeordnet ist. Der Kolben 76 von verhältnismässig grossem Durchmesser setzt sich in Fig.4 nach oben in einen weiteren Kolben 76' mit kleinerem Durchmesser fort. Der kleinere Kolben 76' ist in einem Zylinder 75' mit entsprechend kleinerem Durchmesser geführt. Oberhalb des Kolbens 76' befindet sich im Zylinder 75' ein Druckraum 78 der Brennstoffeinspritzeinrichtung 77, an dem eine Brennstoffzufuhrleitung 79 angeschlossen ist. Ausserdem ist an den Druckraum 78 eine ein Rückschlagventil 80 aufweisende Druckleitung 81 angeschlossen, die zu einer Einspritzdüse 82 führt, die in den Brennraum 83 einer langsam laufenden Grossdieselbrennkraftmaschine mündet und in der in bekannter Weise eine nicht dargestellte Düsennadel angeordnet ist. Der Brennraum 83 wird von einem Zylinderkopf 84 und einem Arbeitskolben 85 begrenzt, der in einem Zylinder 86 in bekannter Weise beweglich geführt ist. Ausser der Brennstoffzufuhrleitung 79 ist am Zylinder 75' etwas unterhalb der Mündung der Leitung 79 eine Ueberströmleitung 88 angeschlossen, deren Mündung mit am Kolben 76' vorgesehenen, nicht dargestellten Steuerkanten zusammenwirkt. In Fig.4 oberhalb des Kolbens 76 ist am Zylinder 75 eine Druckluftleitung 90 angeschlossen, über die oberhalb des Kolbens 76 Luft zugeführt wird, die als Feder wirkt und ein Zurückbewegen des Kolbens 76 in seine untere Stellung bewirkt, wenn die Wirkung der auf der Unterseite des Kolbens 76 anstehenden, vom Druckmittel in der Leitung 74 herrührenden Druckkraft beendet ist.

Das elektrische Steuersignal für den Antrieb 1 wird über eine Signalleitung 100 zugeführt, in der ein Funktionsgenerator 101 angeordnet ist. Im Funktionsgenerator 101 ist das Einspritzgesetz einprogrammiert, dass die Menge des einzuspritzenden Brennstoffes und dessen Verteilung während der Einspritzdauer wiedergibt. Dem Funktionsgenerator 101 werden entsprechende Betriebsparameter in bekannter, nicht näher dargestellter Weise zugeführt. Am Funktionsgenerator 101 ist über eine Signalleitung 102 ein Kurbelwinkelgeber 103 (shaftencoder) angeschlossen, der über eine Signalleitung 104 den jeweiligen Kurbelwinkel α ermittelt.

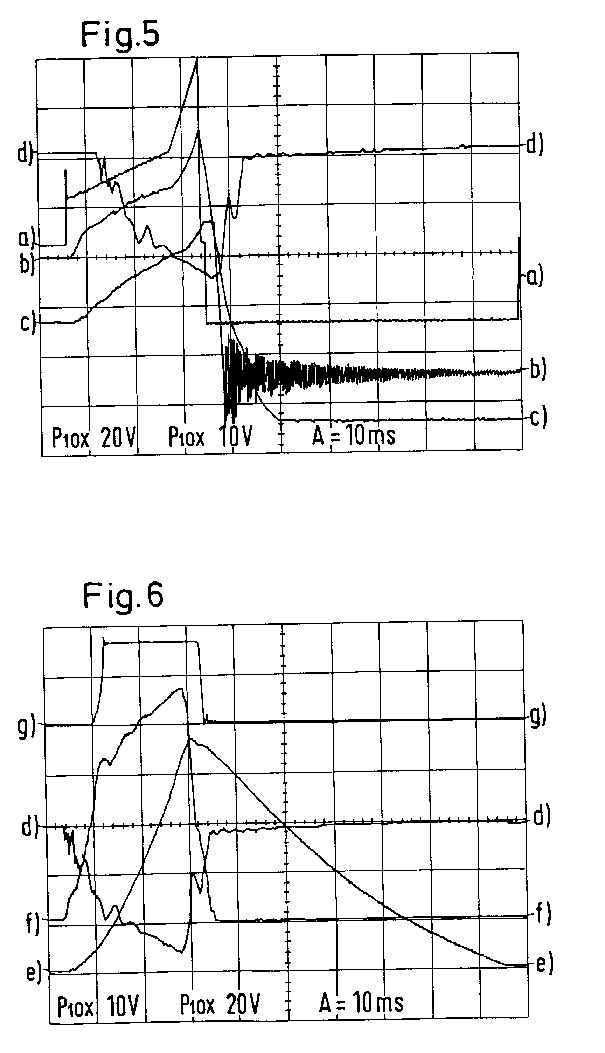

In Fig.5 gibt die Kurve a) den Verlauf des elektrischen Steuersignals wieder, das über die Signalleitung 100 in Fig.4 dem elektrodynamischen Antrieb 1 zugeführt wird. Die Kurve b) zeigt den Bewegungsverlauf der Ventilspindel 26 mit dem Steuerkolben 27, während die Kurve c) den Verlauf der Bewegung des Schieberkolbens 62 (Fig.3) wiedergibt. Die Kurve d) gibt den Verlauf des Druckes des Druckmittels in der Leitung 74 (Fig.4) wieder, das auf die Unterseite des Kolbens 76 der Brennstoffeinspritzeinrichtung 77 wirkt.

Die Kurve d) ist auch in Fig.6 eingezeichnet, um die Relation zum Einspritzvorgang darzustellen. Die Kurve e) gibt als Folge des Druckes gemäss der Kurve d) den Bewegungsverlauf der Kolben 76, 76' wieder, während die Kurve f) den Verlauf des Brennstoffdruckes im Druckraum 78 oberhalb des kleineren Kolbens 76' zeigt. Schliesslich zeigt die Kurve g) in Fig.6 den praktisch rechteckig verlaufenden Hub der Düsennadel in der Einspritzdüse 82.

Ein solcher rechteckiger Verlauf des Düsennadelhubes ist allgemein erwünscht, denn er führt zu einer optimalen Verbrennung des in den Brennraum 83 eingespritzten Brennstoffs. Dabei wird in vorteilhafter Weise in der Steuervorrichtung 91 ein Minimum an bewegten Teilen benötigt, nämlich die Ventilspindel 26 und der Schieberkolben 62.

Anstelle des Permanentmagnets 2 kann auch ein ein permanentes Magnetfeld erzeugender Elektromagnet verwendet werden.

## Patentansprüche

1. Vorrichtung zum Steuern des Durchflusses eines hydraulischen Druckmittels von einer Druckmittelquelle zu einem vom Druckmittel beaufschlagten Kolben (35'), mit einem eine axial bewegbare Ventilspindel (26) mit Steuerkolben (27) enthaltenden Ventilgehäuse (20), das mindestens einen mit der Druckmittelquelle in Verbindung stehenden Zufuhrkanal (21), mindestens einen mit dem Kolben in Verbindung stehenden Kanal (22) und mindestens einen Ablaufkanal (23) aufweist, wobei der Steuerkolben (27) wahlweise den mit dem Kolben (35') in Verbindung stehenden Kanal (22) mit dem Zufuhrkanal (21) oder dem Abfuhrkanal (23) verbindet und wobei die Ventilspindel (26) von einer mit elektrischem Strom gespeisten Spule (8) angetrieben ist, die in einem vom permanenten Magnetfeld durchsetzten Luftspalt (7) zwischen den beiden Magnetpolen (5', 6) eines Magnets (2) angeordnet ist, dadurch gekennzeichnet, dass die Ventilspindel (26) mit einem zwei Flansche (11, 12) aufweisenden Spulenträger (9) verbunden ist, zwischen dessen Flansche die Antriebsspule (8) gewickelt ist, und dass im Bereich der Magnetpole (5', 6) mindestens ein Kanal (68) für die Zufuhr von Kühlluft zur Antriebsspule (8) vorgesehen ist.

2. Vorrichtung nach Anspruch 1, dadurch gekennzeichnet, dass der Magnet ein Permanentmagnet (2) ist.

3. Vorrichtung nach Anspruch 1 oder 2, dadurch gekennzeichnet, dass der vom Druckmittel beaufschlagte Kolben ein Schieberkolben (42, 62) eines 3/2-Wegeventils ist, indem der Schieberkolben mit seinem einen als Steuerkolben (54) ausgebildeten Ende in einen druckmittelgefüllten Steuerraum (55) ragt.

4. Vorrichtung nach Anspruch 3, dadurch gekennzeichnet, dass an der Mantelfläche des Schieberkolbens (42,62) eine Abtlachung vorgesehen ist, die zwei Steuerkanten (51,53) bildet, von denen die eine (53) mit dem Steuerraum (55) und die andere (51) mit einem Abfuhrkanal (49,50) des 3/2-Wegeventils zusammenwirkt.

5. Vorrichtung nach den Ansprüchen 3 und 4, dadurch gekennzeichnet, dass im Schieberkolben (42,62) ein Kanal (59,59') vorgesehen ist, der einerseits mit einem Druckmittelzutuhrkanal (43) des 3/2-Wegeventils in Verbindung steht und andererseits über eine Drossel (52) und eine weitere Abtlachung in der Mantelfläche des Schieberkolbens (42,62) mit dem Steuerraum (55) in Verbindung gebracht werden kann.

6. Vorrichtung nach den Ansprüchen 1 bis 5, dadurch gekennzeichnet, dass die Ventilspindel (26) mit dem Steuerkolben (27) in einer axialen Bohrung (63) des Schieberkolbens (62) des 3/2-Wegeventils gelagert ist.ist.

7. Vorrichtung nach Anspruch 6, dadurch gekennzeichnet, dass im Schieberkolben (62) im Bereich des Steuerkolbens (27) der Ventilspindel (26) ein die axiale Bohrung (63) mit dem Steuerraum (55) verbindender Kanal (64) und neben diesem ein die axiale Bohrung (63) mit dem Abfuhrkanal (49,50) des 3/2-Wegeventils verbindender Kanal (65) vorhanden sind und dass der mit dem Druckmittelzufuhrkanal (43) im 3/2-Wegeventil in Verbindung stehende Kanal (59') im Schieberkolben (62) bis in den Bereich des Steuerkolbens (27) der Ventilspindel (26) verlängert ist und in die axiale Bohrung (63) des Schieberkolbens (62) mündet.

8. Vorrichtung nach einem der Ansprüche 1 bis 7, dadurch gekennzeichnet, dass das 3/2-Wegeventil mit dem druckmittelbeaufschlagten Kolben (76) einer Brennstoffeinspritzeinrichtung (77) für eine Hubkolbenbrennkraftmaschine verbunden ist.

## Claims

1. An equipment for controlling the flow of a hydraulic pressure medium from a source of pressure medium to a piston (35') which is acted upon by the pressure medium, and having a valve housing (20) which contains an axially movable valve spindle (26) with a control piston (27) and exhibits at least one feed channel (21) connected to the source of pressure medium, at least one channel (22) connected to the piston and at least one drain channel (23), so that the control piston (27) at option connects the channel (22) connected to the piston (35') to the feed channel (21) or to the drain channel (23), the valve spindle (26) being driven by a coil (8) which is fed with electric current and arranged in an airgap (7) through which passes the permanent magnetic field between the pair of poles (5', 6) of a magnet (2), characterized in that the valve spindle (26) is connected to a coil-carrier (9) which exhibits two flanges (11, 12) between which is wound the driving-coil (8), and that in the region of the poles (5' 6) of the magnet at least one channel (68) is provided for feeding cooling air to the driving-coil (8).

2. An equipment as in Claim 1, characterized in that the magnet is a permanent magnet (2).

3. An equipment as in Claim 1 or 2, characterized in that the piston which is acted upon by the pressure medium is a sliding piston (42, 62) of a 3/2-way valve in which the sliding piston at that end of it which is made as the control piston (54), projects into a control space (55) filled with pressure medium.

4. An equipment as in Claim 3, characterized in that on the surface of the sliding piston (42, 62) a flat is provided to form two control edges (51, 53) of which the one (53) cooperates with the control space (55) and the other (51) with a drain channel (49, 50) from the 3/2-way valve.

5. An equipment as in Claims 3 and 4, characterized in that in the sliding piston (42, 62) a channel (59, 59') is provided which at one side is connected to a pressure medium feed channel (43) of the 3/2-way valve and at the other side via a throttle (52) and another flat in the surface of the sliding piston (42, 62) may be brought into connection with the control space (55).

6. An equipment as in Claims 1 to 5, characterized in that the valve spindle (26) with the control piston (27) is supported in an axial bore (63) in the sliding piston (62) of the 3/2-way valve.

7. An equipment as in Claim 6, characterized in that in the sliding piston (62) in the region of the control piston (27) of the valve spindle (26) there are a channel (64) connecting the axial bore (63) to the control space (55) and at the side of it a channel (65) connecting the axial bore (63) to the drain channel (49, 50) from the 3/2-way valve, and that in the sliding piston (62) the channel (59') which is connected to the pressure medium feed channel (43) in the 3/2-way valve is prolonged into the region of the control piston (27) of the valve spindle (26) and emerges into the axial bore (63) in the sliding piston (62).

8. An equipment as in one of the Claims 1 to 7, characterized in that the 3/2-way valve is connected to the piston (76) acted upon by pressure medium in a fuel-injection equipment (77) for a reciprocating combustion engine.

## Revendications

1. Dispositif de commande de l'alimentation en fluide hydraulique à partir d'une source de fluide sous pression vers un piston (35') actionné par le fluide sous pression, avec un boîtier de vanne (20) contenant une broche de vanne (26), qui peut se déplacer axialement, avec un piston de commande (27), boîtier de vanne (20) qui présente au moins un canal d'alimentation (21) se trouvant en liaison avec la source de fluide sous pression, avec au moins un canal (22) se trouvant en liaison avec le piston et au moins un canal de sortie (23), le piston de commande (27) reliant au choix le canal (22) qui se trouve en liaison avec le piston (35') au canal d'alimentation (21) ou au canal d'évacuation (23) et la broche de vanne (26) étant entraînée par une bobine (8) alimentée en courant électrique, bobine (8) qui est disposée dans un entrefer (7) traversé par un champ magnétique permanent entre les deux pôles magnétiques (5', 6') d'un aimant (2), caractérisé en ce que la broche de vanne (26) est reliée à un support de bobine (9) présentant deux brides (11, 12), entre lesquelles est enroulée la bobine d'entraînement (8), et en ce que l'on prévoit dans la zone des pôles magnétiques (5', 6') au moins un canal (68) pour l'alimentation en air de refroidissement vers la bobine d'entraînement (8) .

2. Dispositif selon la revendication 1, caractérisé en ce que l'aimant est un aimant permanent (2).

3. Dispositif selon la revendication 1 ou 2, caractérisé en ce que le piston qui est actionné par le fluide sous pression est un tiroir (42, 62) d'un distributeur à 3/2 voies, le tiroir pénétrant par son extrémité constituée sous la forme d'un piston de commande (54) dans une chambre de commande (55) remplie de fluide sous pression.

4. Dispositif selon la revendication 3, caractérisé en ce que sur l'enveloppe du tiroir (42, 62) on prévoit un aplatissement, qui forme deux arêtes de commande (51, 53), dont l'une (53) coopère avec la chambre de commande (55) et l'autre (51) coopère avec un canal d'évacuation (49, 50) du distributreur à 3/2 voies.

5. Distributeur selon les revendications 3 et 4, caractérisé en ce que dans le tiroir (42, 62) on prévoit un canal (59, 59'), qui d'une part est en liaison avec un canal d'alimentation en fluide sous pression (43) du distributeur à 3/2 voies et d'autre part peut être mis en liaison avec la chambre de commande (55) par l'intermédiaire d'un étranglement (52) et d'un autre aplatissement dans l'enveloppe du tiroir (42, 62).

6. Dispositif selon les revendications 1 à 5, caractérisé en ce que la broche de vanne (26) est montée avec le piston de commande (27) dans un perçage axial (63) du tiroir (62) du distributeur à 3/2 voies.

7. Dispositif selon la revendication 6, caractérisé en ce que dans le tiroir (62) il y a dans la zone du piston de commande (27) de la broche de vanne (26) un canal (64) qui relie le perçage axial (63) à la chambre de commande (55) et, en plus de celui-ci, un canal (65) qui relie le perçage axial (63) au canal d'évacuation (49, 50) du distributeur à 3/2 voies, et en ce que le canal (59'), qui est en liaison avec le canal d'alimentation en fluide sous pression (43) dans le distributeur à 3/2 voies, est prolongé dans le tiroir (62) jusque dans la zone du piston de commande (27) de la broche de vanne (26) et débouche dans le perçage axial (63) du tiroir (62).

8. Dispositif selon l'une des revendications 1 à 7, caractérisé en ce que le distributeur à 3/2 voies est relié au piston (76), actionné par le fluide sous pression, d'un système d'injection de carburant (77) pour un moteur à combustion interne à piston alternatif.
